(19) Europäisches Patentamt / European Patent Office / Office européen des brevets

(11) **EP 3 461 166 B1**

(12) **EUROPEAN PATENT SPECIFICATION**

(45) Date of publication and mention of the grant of the patent:
**01.06.2022   Bulletin 2022/22**

(21) Application number: **17205105.4**

(22) Date of filing: **04.12.2017**

(51) International Patent Classification (IPC):
*H04W 4/46* (2018.01)          *H04W 40/24* (2009.01)
*H04W 40/38* (2009.01)        *H04W 84/18* (2009.01)

(52) Cooperative Patent Classification (CPC):
**H04W 84/18; H04W 4/46; H04W 40/24; H04W 40/38**

(54) **A METHOD TO CLASSIFY A NEIGHBOR IN AN AD-HOC NETWORK, A CLASSIFICATION DEVICE, A VEHICLE COMPRISING A CLASSIFICATION DEVICE AND A COMPUTER PROGRAM**

VERFAHREN ZUR KLASSIFIZIERUNG EINES NACHBARN IN EINEM AD-HOC-NETZWERK, KLASSIFIZIERUNGSVORRICHTUNG, FAHRZEUG MIT EINER KLASSIFIZIERUNGSVORRICHTUNG UND EINEM COMPUTERPROGRAMM

PROCÉDÉ POUR CLASSER UN VOISIN DANS UN RÉSEAU AD HOC, DISPOSITIF DE CLASSIFICATION, VÉHICULE COMPRENANT UN DISPOSITIF DE CLASSIFICATION ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **22.09.2017   DE 102017008920**

(43) Date of publication of application:
**27.03.2019   Bulletin 2019/13**

(73) Proprietor: **Fraunhofer-Gesellschaft zur Förderung der angewandten Forschung e.V.**
**80686 München (DE)**

(72) Inventors:
• **Roscher, Karsten**
  **80803 München (DE)**
• **Nitsche, Thomas**
  **81541 München (DE)**

(74) Representative: **2SPL Patentanwälte PartG mbB**
**Landaubogen 3**
**81373 München (DE)**

(56) References cited:
EP-B1- 2 201 725          WO-A1-2010/137006
CA-A1- 2 922 460          US-A1- 2006 098 608
US-A1- 2013 235 758       US-A1- 2013 235 758

## Description

### Field

Examples relate to a method to classify a neighbor in an ad-hoc network, a classification device and a computer program for classifying a neighbor in an ad-hoc network, wherein more specifically, but not exclusively, the classification is based on a signal received from the neighbor.

### Background

Ad-hoc networks are decentralized types of wireless networks which do not rely on a pre-existing infrastructure, such as routers in wired networks or access points. A participant of the ad-hoc network can forward wireless signals to other participants directly and the determination of which nodes are used or to which neighbor participants signals or data is sent is made dynamically.

In some ad-hoc networks, e.g. in vehicular ad-hoc networks (VANETs), the respective communication relationships can change continuously due to a high mobility of the participants. Communication partners, network infrastructure (e.g. intelligent traffic lights) or mobile radio base stations can appear and vanish unpredictably from the communication range of e.g. a vehicle which participates in the ad-hoc network. For assessing the current network situation and choosing communication partners an assessment might be necessary regarding what other participants may be reached directly at any given time.

To choose an available communication partner, there exist methods that evaluate the time which has passed since receiving a last control message with a position update, e.g. a beacon package. An example for this approach is the ETSI Intelligent Transport Systems (ITS) GeoNetworking Standard which is common for networked vehicles. It describes the routing of vehicle-to-vehicle messages across several communication nodes in the direction of a geographical destination address. Based on such routing, for example, all vehicles in a road section ahead of an accident may be informed about traffic hazards. The route is built dynamically and at every transmitting communication node one or more neighbors are be selected which are closer to the message target coordinate. The selected neighbors may be chosen from a list of neighboring nodes previously detected by received messages from the respective neighbors. One particular example for a received message is a beacon broadcast by a neighbor which comprises information of the neighbors position an optionally on further kinematic data of the sending neighbor. The one or several selected neighbors so become the next hop on the route and perform the next transmission step of the message until the target area is reached. One system standard defines a threshold value (timeout) for the time since receiving the last beacon package. If the timeout is exceeded, a neighboring node can be considered as not available as a next hop or as a direct communication partner anymore and can, therefore, be removed from the series of potential transfer nodes. A neighbor can so be classified by using the timeout and messages can be sent to that neighbor as long as the timeout condition is not met, i.e. if the time span since the last update from this neighbor is not longer than the timeout condition.

However, this approach can lead to erroneous classifications or assessments, as e.g. a potential neighbor can disappear behind a house again sending the last package (cross traffic) and is erroneously selected to be the transfer node although he is in reality unable to receive data sent to him. An erroneous classification could also be possible if a position update of a communication node which is out of the normal communication range is received due to a constructive overlaying of several broadcasting paths, so that messages transmitted shortly afterwards cannot be received successfully. In particular the last mentioned effect can result in a very bad performance of choosing neighbors for a communication according to the timeout criterion.

Especially in a so called multi-hop communication in an ad-hoc network, in which a message or signal is passed on by several participants or road users or respective neighbors before it reaches its final destination, it might be important to reliably classify if a neighbor is still available in the current ad-hoc network. If one neighbor of the multi-hop path is not participating in the ad-hoc network anymore, the message might be lost.

There is a need to ameliorate a classification of a neighbor in an ad-hoc network in an efficient way.

The best prior art documents are US2013/0235758 and US2006/0098608.

### Summary

The invention is captured in the attached set of claims.

### Brief description of the Figures

Some examples of apparatuses and/or methods will be described in the following by way of example only, and with reference to the accompanying figures, in which

Fig. 1      shows an example of a method;

Fig. 2      shows an example of entities equipped with classification devices carrying out the method;

Fig. 3      shows an example of ranking of features according to their relevance;

Fig. 4      shows an example of optimized Last Update features;

Fig. 5 and 6     show examples of a classification accuracy for unicast and broadcast transmissions, respectively;

Fig. 7     shows an example of Brier scores for using different features; and

Fig. 8 to 10     show examples of parameters used for simulating data to determine parameters.

## Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

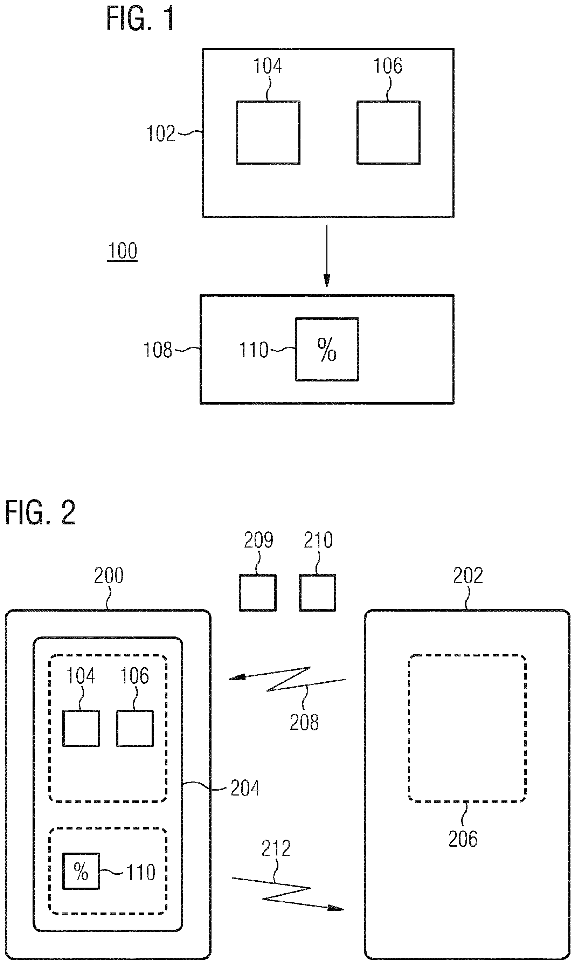

Fig. 1 shows an example of a method 100 to classify a neighbor in an ad-hoc network. The method 100 comprises providing 102 at least two features 104, 106 and determining 108 a reliability 110 of a radio link to the neighbor based on the at least two features 104, 106.

The method is carried out on a first device and the neighbor is a second device. The second device sends a signal to the first device, the signal comprising a number of features. The at least two features of the neighbor comprise information about the neighbor or about a relation of the neighbor to the first device. The features are determined from the signal which is received from the neighbor, e.g. a regularly signal or a beacon or a periodic GeoNetworking update. Such signal is sent in order to establish a radio connection between neighbors before sending data packets and or other information signals which require more energy to be sent.

The at least two features can be e.g. Last Update, Distance, Received Power, Heading Difference, Relative Speed, Time Seen, and Neighbor Speed and can be used to classify the said neighbor. The classification comprises determining 108 the reliability 110 which can comprise information about if the neighbor will be available for a future communication or radio connection or if it is likely that such a communication will fail. In other words, the reliability 110 depends on the features, more precisely on their values.

The first feature can in an example be the Last Update feature which e.g. can comprise a time span of e.g. 2 seconds. The Last Update can mean that a neighbor can be considered to be reliable for 2 seconds after the signal with the features was received in a regular situation. A second feature can be Distance which can comprise that a neighbor within a distance of e.g. 20 meters can be considered to be reliable. In an example the distance between the devices can be 10 m and the first device can sent a data packet to the second device, e.g. 1 s after it received the last signal from the second device. In this situation the neighbor can be determined to be reliable.

In another example the method is carried out on the second device additionally. It can be possible that numerous devices, e.g. vehicles, are equipped with radio transceivers configured to send data packets to other devices. In order to classify other devices with respect to their respective reliability from the point of view of a single device it is possible, that every device determines the reliability of each other device. By using the proposed method in this way, it can be possible to improve a reliability of an ad-hoc network, e.g. a VANET. Each device can determine for example which of the other devices or neighbors in the ad-hoc network are reliable and thus, which neighbors are able at the moment to receive a data packet.

In another example the at least two features can beside the Last Update and the Distance furthermore comprise additionally the features Heading Difference and Relative Speed. The Heading Difference can indicate that the neighbor and the first device itself move into contrary directions, the Relative Speed can signal a value of e.g. 100 km/h, so that in this particular example both devices move away from each other with a speed of 100 km/h. By considering this additional information in the former example, it can be, that although the time span of the Last Update feature of 2 s is not exceeded and the second device is within a 20 m distance to the first device a sent data packet might be not received by the neighbor if it is sent 1 s after the last received message from this neighbor. In such situations it is possible that the neighbor is considered to be unreliable although two of the features would show that this neighbor could be considered to be reliable when using only those two features. In other words, some features might be more relevant than others for determining the reliability and/or some values of a specific feature might indicate a different result of the determination of the reliability in respectively different situations, e.g. some other features comprising respectively different values.

Providing more than one feature thus can increase an accuracy of the provided or determined reliability and the classification can thus be improved. Because in some examples it is possible that up to 17 different features are used or provided at once it can be complex to determine a respective relevance of e.g. each of those features comprising a respective specific value (e.g. 1 s since the Last Update or 10 m distance to the neighbor) in combination with all other features and/or their respective values. Therefore, it can be useful to use machine learning techniques to determine the reliability of the neighbor.

In an example for classification, the field of machine learning offers a plurality of approaches which lead to similar results in the classification. For a practical implementation in a protocol, here a Multilayer Perceptron (MLP) seems to be especially suitable. An MLP is an artificial neuronal network having each one input and output layer and one or several hidden layers. A positive effect of the MLP can be that it requires very little memory space during runtime and may be implemented efficiently using simple linear algebra (matrix multiplication) on a plurality of platforms. Main work is done a priori by an offline training using existing training data, in other words, much of computational work can be outsourced from a device which is about to carry out the method to classify a neighbor. Such training can be only executed once and may also be outsourced to powerful servers. A detailed description of the classification by means of machine learning approaches may be gathered from the following section.

<u>Machine Learning.</u> Several approaches from the machine learning domain can be applied taking all features or a subset thereof into account: e.g. k-nearest neighbors, decision trees, random forests and the multilayer perceptron (MLP). With proper parameter tuning they all can provide a similar classification performance with less than 2% of deviation. Therefore it can be efficient to focus on the MLP because once trained it has the lowest memory requirements (weight matrices only) and its output can be computed efficiently with basic linear algebra. Therefore MLP can be especially suitable for integration into embedded devices and networking protocols. MLPs are multi layered networks of nodes that apply a nonlinear activation function $\sigma(\nu)$ to map their input to an output value:

$$z_{k,l} = \sigma\left( \beta_{k,l} + \vec{\alpha}_l^T \ \vec{z}_{l-1}\right)$$

where $z_{k,1}$ is the output of the k-th node in the l-th layer with $1 \in [1,m]$, $\beta_{k,l}$ in is a static bias term, and $\vec{a}_l$ are the weights applied to the outputs $\vec{z}_{l-1} = \{\vec{z}_{0,l-1},...,\vec{z}_{i,l-1}\}$ of the i nodes of the previous layer l - 1. The input is applied as $\vec{z}_0 = \vec{x}_r$. For binary classification the output layer consists of a single node with its own activation function $\sigma_{out}$ to calculate $\hat{f}$ applying for each intermediate node the following equation:

$$\hat{f}_{MLP}(\vec{x}_r) = \sigma_{out}(\beta_{1,m} + \vec{\alpha}_m^T \vec{z}_{m-1})$$

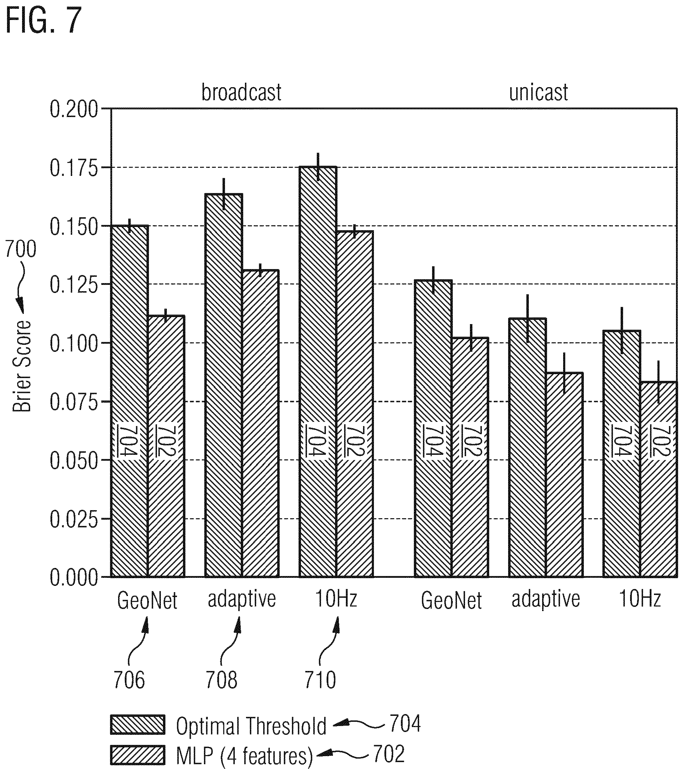

In an evaluation all input variables were standardized, i.e. scaled to have mean $\mu = 0$ and standard deviation $\sigma = 1$, before being fed into the network. Training of the MLP can be based on stochastic gradient descent. Parameter tuning can be performed using a grid search with cross-validation on the training data. It can be found a MLP consisting of two hidden layers - with 50 nodes in the first and 20 nodes in the second - to perform best if all features are included. With fewer features smaller networks can be considered as well. Further, the rectified linear unit function $\sigma(\nu) = max(0,\nu)$ can be selected for the activation of hidden layer nodes while the output node can use a logistic activation $\sigma_{out} = (1 + e^{-\nu})^{-1}$. For the following results the classifier on a combined data set was trained with data from three traffic scenarios. However, the performance on each test set was evaluated individually to identify potential bias issues with respect to e.g. traffic densities. Besides accuracy, precision and recall also the Brier score was calculated (as shown in fig. 7) on the test data using following formula:

$$B = \frac{1}{n}\sum_1^n (\hat{y} - y)^2$$

where n is the number of test samples and $B \in [0,1]$. A low Brier score indicates that a classifier is capable of estimating not only the class but also the probability of that class with high accuracy.

To classify a neighbor an estimation of a current relationship with a remote node r can be modelled as a binary classification problem, where an input vector $\vec{x}_r$ consisting of p features is used to make predictions of an output $y_r$, denoted by $\hat{y}_r$ with $yr \in [0,1]$. r can be considered to be a neighbor if $\hat{y}_r > 0.5$; A goal can be to find a suitable an approximation function $\hat{y}_r = \hat{f}(\vec{x}_r)$.

By considering additional information available to the communication module of networked vehicles without an additional exchange of messages, a clearly more reliable classification of neighborhood relationships is possible. The classification methods considered for the method include very little computational effort, and consequently the method may be introduced virtually without a modification of current communication hardware.

A further effect of the approach can be the possibility, apart from pure classification (binary decision: yes / no) to acquire an estimate for the probability whether a communication with a potential communication partner is possible. Such probability may subsequently be considered in more complex decision algorithms, e.g. for the selection of technologies in heterogeneous networks (e.g. combination of direct vehicle-to-vehicle communication with mobile radio communications) or for the selection of paths in multi-hop networks, and be linked with other boundary conditions.

Fig. 2 shows an example of entities 200, 202 equipped with respective classification devices 204, 206. In this example the entity 202 sends a signal 208 with at least two features 209, 210 to the entity 200. It is possible that the entity 200 sends a data packet 212 to the entity 202 after having received the signal 208.

In one example, the entity 200 is a vehicle 200 on which the method 100 is carried out. From this point of view, the entity 202, e.g. another vehicle, a traffic light or another wireless enabled device which can participate in ad-hoc networks, is the neighbor 202 of vehicle 200, which can be classified. Therefore, the neighbor sends a signal comprising at least two features 209, 210. In another example, the situation might be reversed such that the vehicle 200 is the neighbor and the method 100 is carried out on the classification device 206 of the vehicle 202. It is also possible that both entities 200, 202 classify each other according to method 100.

In an example, the vehicle 200 might drive behind the neighbor 202 and the signal 208 is received with a frequency of 10 Hz, i.e. the vehicle 200 receives the signal 208 every 0.1 s. The signal 208 can comprise the same features with different values each time. However, if the distance between the vehicles 200, 202 remains constant, the value of the Distance feature can remain constant as well. In this situation, the Heading Difference feature could indicate that there is no difference between the respective driving directions of the vehicles 200, 202; also the Relative Speed feature could indicate a value of zero, because vehicles 200 and 202 go with a same speed.

With continuously received signals 208 as in the example however, the Time Seen feature can increase. A high value of the Time Seen feature could indicate in combination with the other features which do not change that the neighbor 202 is very reliable. Thus, the determined 108 reliability 110 of the neighbor 202 can be that high that a data packet 212 can be sent to the neighbor 202 with a very high probability that the neighbor 202 receives the data packet 212.

In another example the features 209, 210 are received from the neighbor 202 and from another neighbor, not shown in fig. 2. The classification device 204 can determine that the reliability of the other neighbor is higher than the reliability of neighbor 202, such that the data packet 212 is not sent to the neighbor 202 but to the other neighbor instead.

The at least two features 209, 210 can be determined from one such signal 208, e.g. the last received such signal from the neighbor 202, and/or from a combination of such signals received prior to the last signal from the same neighbor. The above described feature Time Seen is such a signal which can be determined from a series of received signals 208.

In an example it is possible that the reliability of the neighbor 202 is determined 108 to be medium, e.g. 50%. With such a probability it can e.g. be decided if it is worth or not to send a signal to the neighbor. E.g., in the case that the vehicle 200 or a sending device 200 has a high charged energy storage, a signal 212 can be sent whereas in the case that the energy storage of vehicle 200 is at low charge, a signal might not be sent because of a risk of useless energy consumption (the chances that the sent signal might be received by the neighbor are to low compared to the cost of energy consumption in this situation). Another aspect may be that also in cases where energy consumption might be negligible avoiding sending messages that would not be received by the neighbor the avoiding has the effect that a respective wireless channel is not loaded unnecessarily. The effect may be that the channel that is a shared medium and thus has to be used in a responsible manner can be used efficiently and economically while ineffective usage can be avoided.

A reliability thus can be high if a radio link to the neighbor 202 can be established successfully and the signal 212 sent to the neighbor will be received by the neighbor 202. Such a neighbor 202 can be described as reliable. If the neighbor 202 is e.g. a vehicle driving behind the vehicle 200, its reliability can be high and a probability that it will e.g. act according to information sent to him in the data packet 212, e.g. about a future breaking maneuver can be high so that the vehicle 200 can e.g. break strongly without the risk that the vehicle 202 crashes in it. A vehicle comprising the neighbor classification device 204 can better interact with other vehicles more reliably and very efficient.

The classification device 204 of an example can comprise parameters, e.g. coefficients of a neural network like a MLP, which can allocate a relevance to different features 209, 210. By comprising before determined parameters, the classification device 204 can determine the reliability fast and with low computational effort.

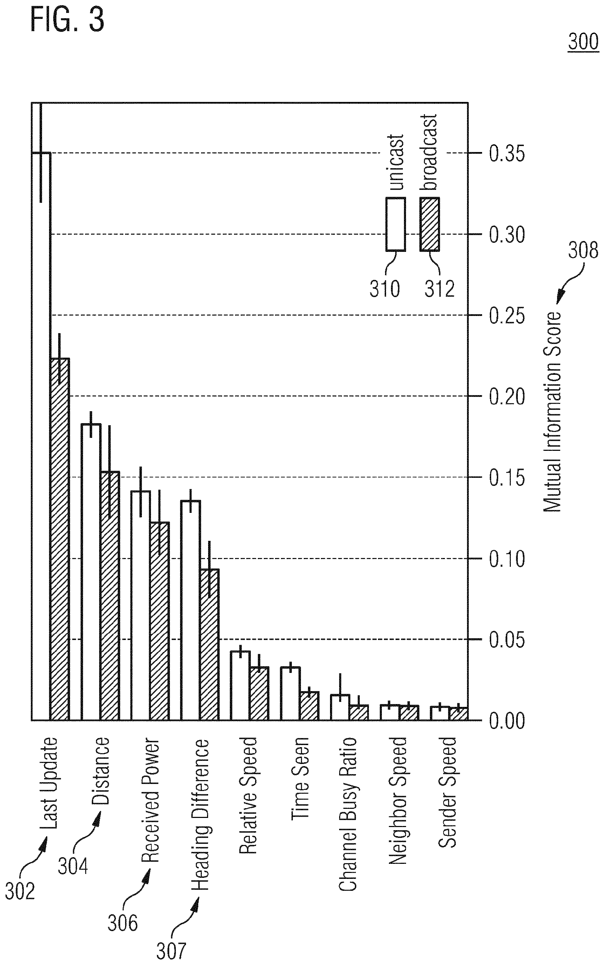

Fig. 3 shows an example of ranking 300 of features 302, 304, 306 according to their rele-vance 308 which can be expressed by a mutual information score.

Based on a sufficiently large set of data consisting of measured factors (features 302, 304, 306) at the time of package transmission (i.e. sending the data packet 212) and a sufficient indication on the success or failure of transmission to the communication partner (i.e. the neighbor 202 successfully receives the data packet 212), established methods of static interference or machine learning may be utilized for ranking the features. With the help of these methods, especially relevant features 302, 304 may be determined which are highly significant regarding the success or failure of the transmission to a direct communication partner. Based thereon, robust predictions for future transmission attempts may be derived. The set of training data may here be collected both in a detailed simulation environment and by real measurements.

Possible features can include information on the transmitter, this can be the entity 200: position (for the Distance feature), speed (for the Relative Speed feature), direction of movement (for the Heading Difference feature), current channel load and also information on the communication participant, this can be the neighbor 202, to be assessed: position, speed, direction of movement, time passed since the last update, signal strength of the received packages, etc. Further, more variables may be used like the distance to one another, relative speed or direction of movement as well as profiles on the update history (variance of times between two position updates in the last time window).

In examinations on simulated data up to today in particular the following features were pointed out to be especially relevant: time passed since the last update (Last Update), distance between the participants (Distance), signal strength of the received packages (Received Power) and angle between the directions of movement (Heading Difference). Further, the currently measured channel load (Channel Busy Ratio) in case of higher densities of participants may be a good indicator. The approach may here be used both for unicast (one message receiver) and also for broadcast (several message receivers).

According to the claimed invention providing features also comprises ranking of the features, and it is possible to determine the most predictive features for the classification of neighbor relationships, e.g. in VANETs and to rank them in order of their relevance. Using fewer features can increase the generalization performance of a classifier, e.g. classification device 204, and also reduce its complexity. All available features can be ranked based on an estimate of a mutual information between the feature 209, 210 and a successful reception of the packet 212. Fig. 3 summarizes the results for the most relevant predictors with a distinction between unicast 310 and broadcast 312 transmissions. In some cases, the four main features are: time since the last received update 302, distance 304 between the nodes, signal strength 306 of the last received packet and the difference between the headings 307 (driving direction). In case of unicast 310 all features appear to carry more information about the current status of a potential neighbor 202. The difference between unicast and broadcast can be explained by the retransmission scheme that compensates for some of the random error, e.g. introduced by fast fading, which cannot be deduced from the collected data. The time since the last update 302 alone appears to be a very powerful predictor for the current connectivity - especially for unicast 310. This observation is also in line with the common approach of using timeout values to determine if another node is a direct neighbor or not, however the common approach by using only the timeout might be not accurate and lead to erroneous classifications. The relevance of most features is consistent across scenarios and beaconing schemes, with one exception: Channel Busy Ratio (CBR). In most of our scenarios it carries little information since we see average busy ratios ranging from 0.05% to 3.8% with rare hotspots of up to 60%. However, with an increase in generated messages and road traffic density its relevance for the prediction increases as well. CBR as a feature can be even more significant in dense and crowded situations with a constantly saturated channel. In addition, the features can be ranked using the feature rele-vance derived from a Random Forest classifier as well as a forward step-wise selection. Both were consistent in identifying the main features but showed diverging results for the less significant variables.

It can be possible to provide the most relevant features and their respective relevance in order to weight the respective features accordingly. Such ranking can be done by calculation of the relevance 308 and saving the information in parameters with which the different features can be weighted in determining the reliability 110.

<u>Time Threshold.</u> In one example, the Last Update feature can be provided. A baseline classification function can use a threshold $t_{up}$ for the time $x_{r,t}$ since the last status update from remote node r:

$$\hat{f}_t(\vec{x}_r) = \begin{cases} 1, & \text{if } x_{r,t} \leq t_{up} \\ 0, & \text{if } x_{r,t} > t_{up} \end{cases}$$

This rule is widely applied in different routing protocols and also used in the ETSI GeoNetworking standard where the default threshold $t_{up,GN}$ is defined to be 20 s. However, 20 s appear to be very long especially compared to short beaconing intervals between 0.1 s (CAM with 10 Hz) and 3.75 s (GeoNetworking beacon). Therefore, training data can be used to compute the optimal threshold $t_{up,opt}$ for different data sets. It is intended to maximize the classification accuracy, thus the zero-one loss function is minimized:

$$L(y, \hat{y}) = \frac{1}{n} \sum_{1}^{n} I(y \neq \hat{y})$$

where I is the indicator notation and n is the number of training samples. In other words, an accuracy of the determined reliability can be increased when using an optimized time span for different signals with different time intervals between two signals received from the neighbor.

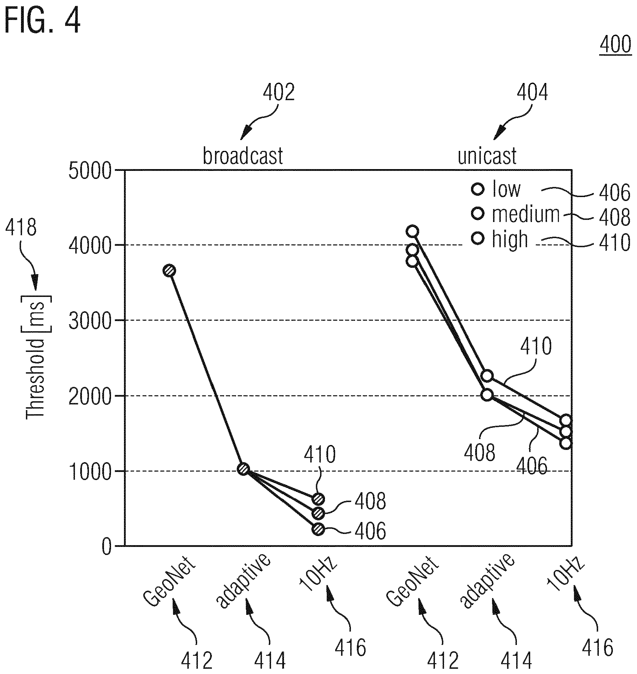

Figure 4 shows an example 400 of such optimized Last Update features for the case of broadcast 402 and unicast 404 transmissions. The example shows optimal thresholds for individual scenarios, beaconing schemes and transmission modes. It differentiates for low 406, medium 408 and high 410 traffic densities and for different update frequencies for beaconing schemes GeoNet 412, adaptive 414 and 10Hz 416. It is obvious that the value of an optimized threshold 418 highly depends on the update frequency. Higher update rates, like for the 10Hz 416, lead to lower thresholds. In the example, there is also a significant difference between unicast and broadcast. While broadcast needs to cope with more uncertainty due to random fading and collisions, unicast allows for higher threshold values due to the its increased reliability. However, the road traffic scenario (i.e. traffic density 406, 408, and 410) appears to have very little influence. The optimal threshold can also be determined for a combined data set with samples equally selected from all three traffic scenarios which lead to values almost identical to those for medium density.

It can therefore be possible to use an optimal threshold value for the Last Update feature averaged with respect to different traffic scenarios since in some examples different traffic densities might not heavily affect the respective values. By contrast, the optimal threshold values can be determined with respect to a frequency at which a signal comprising the at least two features is received from the neighbor. For example signals of the GeoNet 412 beaconing scheme with a time interval of 3.75 s between two such signals can result in higher threshold values than signals of the 10Hz 416 beaconing scheme (e.g. CAM) with a time interval of 0.1 s between two such signals.

In some examples providing an optimized Last Update feature can increase an accuracy of the determined reliability significantly in contrast to a standard time-out value with a fixed time span.

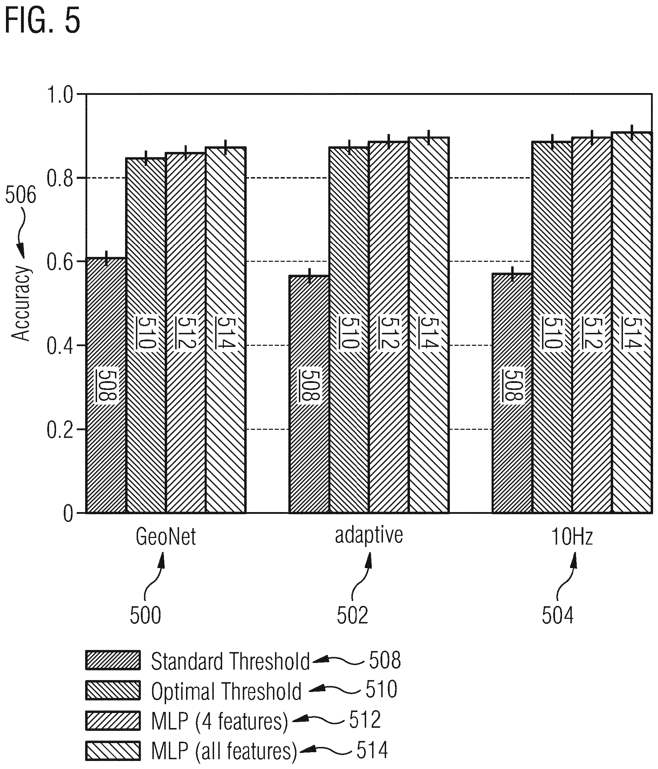

This can be seen in Fig. 5, which shows examples 500, 502, 504 of a classification accuracy 506 for unicast transmissions. For each example, the accuracy 506 is shown for different provided features. It is shown, that an accuracy which is reached by providing a Standard Threshold value 508 is lower than an accuracy which is reached by providing an Optimal Threshold 510, i.e. an optimized Last Update. Furthermore it can be clearly seen that when providing a set of four features 512 the accuracy can be further increased and when providing all features 514, i.e. 17 different features deducible from the received signal, the accuracy can even be further increased.

Results: Unicast. The classification performance was thus investigated on unicast transmissions comparing two last-message-received threshold classifiers (standard and optimal) as well as two MLPs, one with all features ($MLP_{full}$) and one where only the four most significant features according to Section HI are considered ($_{MLP4}$). Figure 5 shows the classification accuracy for each beaconing scheme averaged over all traffic scenarios. Overall, performance of classifiers increases with higher update frequencies due to more recent information from remote nodes. Furthermore, missing updates can be detected more quickly leading to shorter periods of uncertainty. Comparing the individual classifiers reveals the standard neighbor timeout to perform only slightly better than random guessing. In contrast, the other three approaches perform significantly better with a slight advantage for the MLPs 512, 514 over the optimal last-message-received threshold 510. While the latter improves by up to 32% over the standard threshold 508, the MLP based approaches achieve additional accuracy in the range of 2%. The false positive rate is around 11% for all three approaches 510, 512 and 514 with the MLPs offering better recall. The performance is consistent across traffic scenarios indicating good generalization properties.

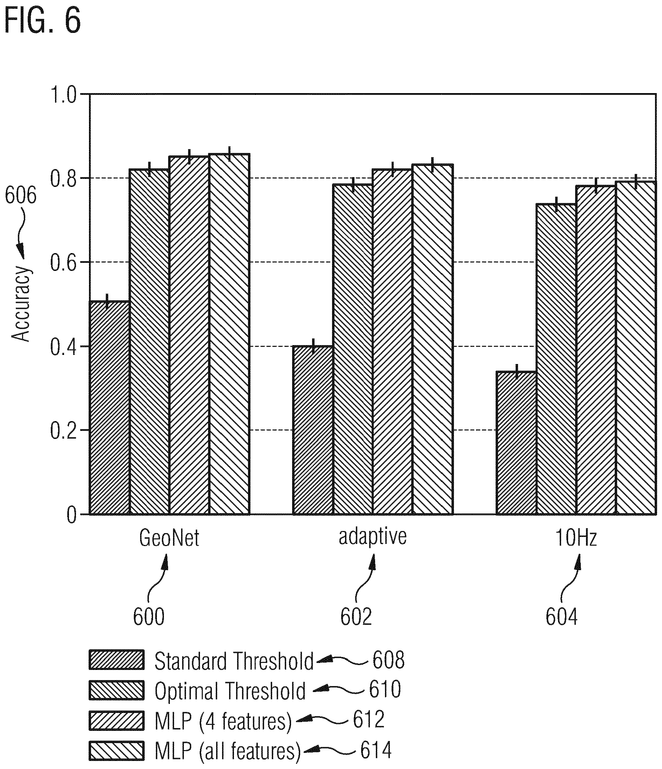

Fig. 6 shows further examples 600, 602, 604 of a classification accuracy 606 for broadcast transmissions. Similar as in fig. 5, provided features are Standard Threshold 608, Optimal Threshold 610, four features 612 and all features 614. Also for broadcast transmission it can be seen that providing optimal instead of standard threshold as well as providing more features can lead to higher accuracy.

Results: Broadcast. Similar to the unicast results of fig. 5, fig. 6 shows the classification accuracy 606 for broadcast transmissions. Broadcasting can be relevant for routing algorithms with receiver-based next hop selection, e.g. Contention Based Forwarding, and multicast or broadcast dissemination in general. In contrast to the unicast observations all classifiers perform worse with increasing beacon rates since without retransmissions broadcast packets are much more susceptible to frame collisions. However, these cannot be predicted from the collected features leading also to an overall decrease in accuracy compared to unicast transmissions. Also, precision drops with higher network load, e.g. the optimal threshold classifier drops from 77% to 57% if CAMS with 10 Hz (as in example 604) are used instead of GeoNetworking beacons (as in example 600). Despite its high predictive value, the significance of time since the last update for broadcast packets is less compared to unicast, which explains why, in contrast to unicast communication, the MLPs with more than one input variable offer a substantial performance gain over the optimal last message-received threshold. While the latter offers up to 38% improvement over the standard threshold value, the $MLP_{full}$ achieves 4-5% additional accuracy and up to 8% more precision than the threshold approach. $MLP_4$ performs very equally with exception of the 10 Hz (example 604) scenario where the inclusion of Channel Busy Ratio in the $MLP_{full}$ leads to a slightly larger gap. Similar to unicast, results are consistent across scenarios indicating good generalization properties.

Further, as displayed in Fig. 7, a Brier score 700 shows that a MLP 702 (with providing the at least two features) is much better in estimating the probability compared to simple thresholding 704. The Brier score is shown for different examples GeoNet 706, adaptive 708 and 10Hz 710, the examples using different beaconing schemes as described above. If the improvement offered by the MLPs is worth the added complexity can depend on the application. It is possible that the thresholding approach can suffice for some scenarios were only binary classification is required. However, if algorithms depend on an estimate for the class probability, MLPs and providing at least two feature as the basis for determining the reliability can be the better choice, e.g. in a VANET in an advanced platooning algorithm the controller could adapt the inter-vehicle gap based on the estimated probability to compensate for potential packet loss. The Brier score depicted in Fig. 7 also shows the advanced MLPs' probabilities estimation compared to the last-message-received threshold.

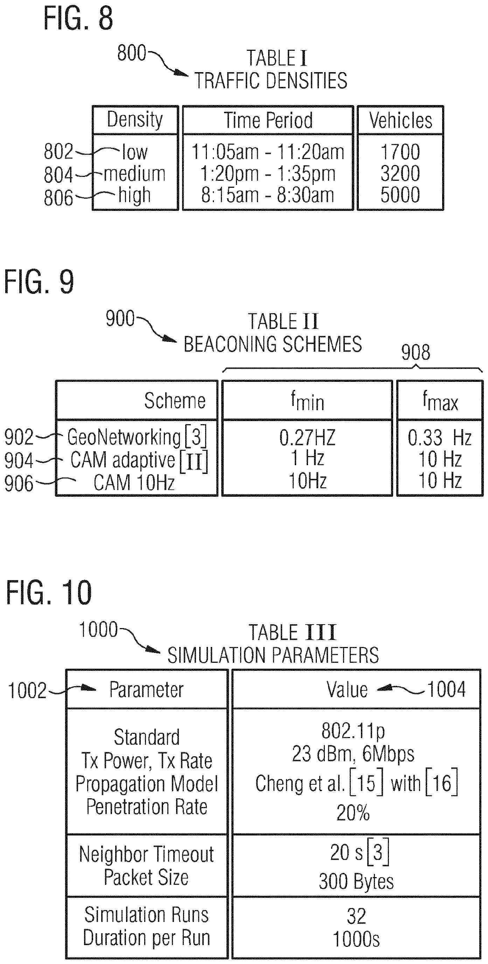

Fig. 8 to 10 show examples of parameters used for simulating data to determine parameters. The parameters can be chosen for simulating a realistic city scenario. In other words, to provide data which comprises the above described features and information about a successful reception of a data packet to a neighbor, the neighbor being classified according to the method, a simulation can be performed which is realistic with respect to a situation in which the method is carried out on a real device, e.g. in a real vehicle.

A data-driven approach requires a sufficient amount of input data covering a variety of situations to avoid biasing the classification algorithms towards special cases. The Luxembourg SUMO Trafiic (LuST) Scenario can fit these requirement well. It provides 24 hours of mobility simulation in the city of Luxembourg and the surrounding highways. The number of active cars ranges from a few dozens (low traffic density) during night to more than 5000 (high traffic density) in rush hours. Three different time periods over day are selected to cover varying traffic densities as summarized in a Table I 800, shown in fig. 8. At the different time periods, a low traffic density 802, a medium density 804 and a high density 806 are used for the simulation. Using different densities could possibly lead to a different relevance regarding the different features and e.g. might be important if also other traffic scenarios like outside a city would be simulated.

In total 17 features can be captured for each transmitted packet in the signal regularly received from the neighbor. The data includes information about the sender: position, velocity, channel busy ratio measurement and size of the neighbor table; and about a potential neighbor: position, velocity, update history and received signal power. Furthermore, relative metrics can be derived like distance, relative speed and heading. The features are intentionally limited to data that is directly available or can be collected without additional communication overhead to ease integration into existing protocols. The status of neighbors is derived from periodic GeoNetworking updates (beacons or Cooperative Awareness Messages (CAMS)) and therefore reflects the state of the last successfully received packet. Local data is assumed to be sampled from a positioning device with a fixed frequency of 10 Hz. Unicast and broadcast transmissions on the medium access (MAC) layer behave differently. While the former uses acknowledgements and a retransmission scheme to improve reliability, the latter is simply transmitted once. Since it is not wanted to limit an investigation to a specific usage scenario, both modes were investigated separately.

A similar approach can be applied to different beaconing schemes for status updates, as seen in a Table II 900: GeoNetworking beacons 902 and Cooperative Awareness Messages (CAMS) with adaptive 904 and 10 Hz 906 fixed frequency 908. For each combination of scenario, beaconing scheme and transmission mode, approximately 1.5 million samples were collected of which 75% were used as training data and the remaining 25% for testing. The simulation environment can consists of the network simulator ns-3, the traffic simulator SUMO and the ezCar2X framework implementing the ETSI ITS protocol stack.

Fig. 10 shows main simulation models and parameters 1002 and respective values 1004 which are summarized in a Table III 1000. Data analysis and statistical inference can be based on Scikit-learn. A relevance of a respective feature or a value of said feature can be determined with respect to the possibility of a successful radio connection to a respective neighbor.

In an example, it is possible that with these simulation methods and simulation parameters such parameters can be determined that are indicating a relevance respectively allocated to at least two features with respect to a reliability of a radio link to the neighbor, wherein the parameters are determined by data of a scenario comprising radio links between neighbors, the data comprising said features and an information about a success of a successful reception of a sent data packet by the neighbor. The scenario can be an above described simulated traffic scenario. In a simulation it can be easily determined, whether or not a data packet sent to a neighbor is also successfully received by this neighbor.

However, in another example it is also possible to determine these parameters based on measurements, e.g. when in a predefined real scenario a second device is informed that it should receive a data packet from a first device. In this way it can be possible to eliminate potential errors which could arise in a simulated scenario. Using simulations or measurements, it can be possible to determine parameters which later might be used for weighting different features with respect to their respective relevance.

Such parameters can later be used, for example in classification device 204 which can be configured to determine a reliability of a neighbor. In a classification device it can be necessary carry out the method with low computational effort. Therefore it can be useful to generate parameters, e.g. as coefficients of a neural network, separately, e.g. on a stationary device or a server farm, and then use those generated parameters on the device which can minimize computational effort on the device.

After all, this application addresses the problem of neighbor selection in ad-hoc networks, e.g. VANETS with the possibility of a data-driven approach. By methods from the field of statistical learning the informative value of several neighbor classification features, which are obtainable in practice without additional communication overhead is evaluated. Link-age, vehicle distance, received power and heading difference are highlighted as the significant indicators and identified channel-busy-ratio as an additional promising candidate under high network load. From theses findings the performance of a binary multilayer perceptron (MLP) classifier is analyzed and link-age-based neighbor selection as the current state of the art was reevaluated. It is shown that with a link-age threshold optimized for the beaconing rate of the communication system significant classification improvements above 30% can be achieved. Further, it is shown that MLP based alternate schemes can outperform state of the art selection accuracy by up to 43% and recommendations are presented, which classification methods fit varying application requirements.

An example in vehicular ad-hoc networks (VANETs) can be multi-hop message dissemination which can show significant importance. For this type of communication, the selection of neighboring nodes with stable links can be vital. According to the application the neighbor selection problem can be addressed with a data-driven approach. To this aim, machine learning techniques can be applied to a massive data-set of e.g. ETSI ITS message exchange samples, obtained from simulated traffic in the highly detailed Luxembourg SUMO Traffic (LuST) Scenario. As a result, by applying the proposed classification methods neighbor selection accuracy can be increased by up to 43% compared to previously known methods.

Vehicular networking based on IEEE 802.11p has recently seen a significant increase in popularity with the up-coming legislation of the DSRC standard in the United States. Further, with the standardization of the competing LTE-V2X feature in 3GPP Release 14, the race for the technological enabler of future connected mobility is opened. In this context multi-hop ad-hoc network architectures are being reconsidered, which is even the case for V2X in 56, since ubiquitous cellular coverage is impractical. With ad-hoc networking also being inherent to IEEE 802.11p based technologies as for example ETSI ITS-G5, a central question for dynamic network structures reemerges: In the fast changing topologies of vehicular networks, which of the neighbors is a reliable communication partner?

Vehicular network topologies change quickly. Vehicles passing each other on opposite lanes of a highway easily reach relative speeds of up to 300 km/h. In urban scenarios buildings create severe signal blockage towards a receiver which turns around a corner. Thus, proper selection of neighboring nodes, that ensure a reliable link at least for the next upcoming messages is challenging. But, transmitting to a neighboring node that unexpectedly gets out of reach does not only impact multi-hop routing strategies. It also hinders other dissemination aspects. For example geo-messaging according to the ETSI ITS standard buffers messages based on a neighborhood decision, and also heterogeneous wireless technology selection can be based on the current set of neighbors. Correct classification of the neighborhood relationship can thus be of very high importance for vehicular networking. Currently, the state of the art for neighbor selection in VANETs is defined by a threshold for the time since the last direct message of a node as specified in the ETSI GeoNetworking standard. In the scientific literature, more complex decision criteria are considered, however neighbor selection is predominantly seen to be part of ad-hoc network routing. Unfortunately, most of this work is not applicable since the distinct dynamics of vehicular networks are omitted. The same also accounts for examples where neighbor classification is addressed explicitly. Exceptions that assume vehicular node movement are either focusing on vehicle grouping for long term routing stability or leverage information from a modified PHY-layer to estimate link stability. More recently, reliable neighbor selection can be considered for cooperate positioning algorithm but is focused on the GPS data fusion aspect.

Contrary to the work mentioned before, according to the application, neighbor selection in vehicular networks is explored as an independent problem, with a data driven approach. By extensive simulation of ETSI ITS communication using the ezCar2X framework in combination with the Luxembourg SUMO Trafiic (LuST) Scenario a wide data basis can be obtained, which can be used to analyze the behavior of neighbor classification in complex traffic scenarios. From the data-set, which reflects the success of message exchange with network neighbors, the potential of several classification features is analyzed to reliably predict network neighborhood. Then, the performance of various classification methods for neighbor selection in vehicular ad-hoc networks is evaluated, which are based on the selected features. In particular, the contributions of the application are as follows. From a wide set of classification features, the most relevant ones for neighbor selection in vehicular networks are determined. The findings are valid for a broad set of traffic densities and message update rates. Further, the performance of several neighborhood classification methods is evaluated on highly detailed VANET simulations based on a realistic city scenario. From this, improved thresholds are proposed for current neighborhood decision based on last message-received thresholds. Last, recommendation is given on which classification method is best used for different vehicular network applications.

For a utilization of the subject of the application different scenarios could be possible. First could be integration into standardization or proprietary expansion for systems of a manufacturer. If the method is to be used for the assessment of neighbors in multi-hop routing, integration into relevant standards (ETSI, 3GPP, 5G) could be possible, wherein here, in particular, Work Item for ETSI GeoNetworking in Release 2 is a possible candidate. It could be possible that the underlying method is also applicable to future 5G networks. In heterogeneous systems which apart from a direct (standardized) networking with ETSI ITS-G5 / 802.11p build on the additional integration of a (possibly proprietary) cloud or backend service (via mobile radio), the proposed method may also be utilized as an device-specific extension or upgrade and thus without standardization. Here, a manufacturer may directly use the method and, if required, a reference implementation. There is further the possibility for the trained network to be utilized itself (configuration parameters and coefficient matrixes), as large amounts of data have to be collected for its creation (simulations, measurement drives), which is very cost and time consuming. The utilization of the Fraunhofer ESK pre-trained network as a "black box" may thus provide an attractive option for users of the method.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

**Claims**

1. A method (100) for determining a reliability of a neighbor (202) in an ad-hoc network, the method comprising:

   providing (102) at least two features (104, 106) of the neighbor (202), the features (104, 106) of the neighbor comprising information about the neighbor or about a relation of the neighbor to a first device, wherein the features (104, 106) are determined from a signal (208) comprising data information about the neighbor, the signal (208) being received from the neighbor (202); and
   determining (108) a reliability (110) of a radio link to the neighbor (202) based on the at least two features,
   wherein providing (102) comprises ranking of features (302, 304, 306) according to a relevance (308) and selecting the at least two features in order of their relevance.

2. The method (100) of claim 1, wherein the reliability (110) is represented by a probability value, the probability value being an estimation for a probability that a data packet (212) sent to the neighbor (202) is received by the neighbor (202).

3. The method (100) of claim 1 or claim 2, wherein the signal (208) received from the neighbor is a periodic GeoNetworking update and/or a Cooperative Awareness Message CAM

4. The method (100) of one of the precedent claims, wherein the at least two features are determined from a signal (208) or from a combination of such signals received from the neighbor (202), wherein the at least two features are respectively different features selected from a group consisting of: Last Update, Distance, Received Power, Heading Difference, Relative Speed, Time Seen, and Neighbor Speed.

5. The method (100) of one of the precedent claims, wherein the at least two features are selected starting from the most relevant feature (302).

6. The method (100) of one of the precedent claims, wherein the provided at least two features of the neighbor (202) are determined from a signal (208) or from a combination of such signals received from the neighbor (202), wherein the at least two features are selected from the group of features: Last Update, Distance, Received Power and Heading Difference.

7. The method (100) of one of the precedent claims, wherein the provided at least two features of the neighbor (202) are determined from a signal (208) or from a combination of such signals received from the neighbor (202), wherein at least one of the two provided features is a Last Update which is optimized with respect to a frequency of a reception of the signal.

8. The method (100) of one of the precedent claims, further comprising:
   determining the reliability based on a Channel Busy Ratio, if a channel is constantly saturated and/or if a number of available neighbors is higher than a predefined number.

9. The method (100) of one of the precedent claims, wherein the reliability (110) is determined using a respectively different weighting of the at least two features (104, 106) according to their relevance (308).

10. Method (100) of one of the precedent claims, wherein the reliability (110) is determined using a neural network, the neural network comprising coefficients based on a training with features (209, 210) being determined at least partly from a signal and an information about a respective successful reception of a data packet (212).

11. Method (100) of one of the precedent claims, further comprising: selecting a reliable neighbor (202) from a plurality of neighbors based on the reliability of the neighbor (202).

12. The method (100) of claim 11, wherein a neighbor (202) is selected from the plurality of neighbors, if a respective reliability of the neighbor (202) is above an upper threshold.

13. The method (100) of claim 11 or 12, wherein the neighbor (202) with a highest reliability of a plurality of neighbors is selected.

14. The method (100) of any of the precedent claims, further comprising determining parameters that are indicating the relevance (308) respectively allocated to at least two features (302, 304) with respect to a reliability of a radio link to the neighbor (202), wherein the parameters are determined by data of a scenario comprising radio links between neighbors (200, 202), the data comprising said features (302, 304) and an information about a success of a reception of a sent data packet (212) by the neighbor (202).

15. A device (204, 206) for determining reliability of a neighbor, the device comprising:

a feature selection device, configured to select at least two features (104, 106) of a neighbor, the features (104, 106) of the neighbor comprising information about the neighbor or about a relation of the neighbor to the classification device, wherein the features are determined from a signal (208) comprising data information about the neighbor, wherein the signal is received from the neighbor, and wherein the at least two features are selected in order of their relevance from a ranking of features (302, 304, 306) according to a relevance (308); and
a unit, configured to determine a reliability (110) of a radio link to the neighbor based on the at least two features.

16. A system for determining reliability of a neighbor, the system comprising

a determination device, configured to determine parameters according to claim 14; and
a device (204) according to claim 15.

17. Vehicle (200) comprising a device (204) according to claim 15.

18. A computer program including program code, when executed, to cause a programmable processor to perform the method of one of the claims 1 to 14.

**Patentansprüche**

1. Ein Verfahren (100) zum Bestimmen einer Zuverlässigkeit eines Nachbarn (202) in einem Ad-hoc-Netzwerk, das Verfahren umfassend:

Bereitstellen (102) von zumindest zwei Merkmalen (104, 106) des Nachbarn (202), wobei die Merkmale (104, 106) des Nachbarn Informationen über den Nachbarn oder über eine Beziehung des Nachbarn zu einer ersten Vorrichtung umfassen, wobei die Merkmale (104, 106) aus einem Signal (208) bestimmt werden, das Dateninformationen über den Nachbarn umfasst, wobei das Signal (208) von dem Nachbarn (202) empfangen wird; und
Bestimmen (108) einer Zuverlässigkeit (110) einer Funkverbindung zu dem Nachbarn (202) basierend auf den zumindest zwei Merkmalen, wobei das Bereitstellen (102) ein Einstufen von Merkmalen (302, 304, 306) gemäß einer Relevanz (308) und ein Auswählen der zumindest zwei Merkmale in der Reihenfolge ihrer Relevanz umfasst.

2. Das Verfahren (100) gemäß Anspruch 1, wobei die Zuverlässigkeit (110) durch einen Wahrscheinlichkeitswert dargestellt wird, wobei der Wahrscheinlichkeitswert eine Schätzung einer Wahrscheinlichkeit ist, dass ein an den Nachbarn (202) gesendetes Datenpaket (212) durch den Nachbarn (202) empfangen wird.

3. Das Verfahren (100) gemäß Anspruch 1 oder Anspruch 2, wobei das von dem Nachbarn empfangene Signal (208) ein periodisches GeoNetworking-Update und/oder eine Cooperative Awareness Message CAM ist.

4. Das Verfahren (100) gemäß einem der vorangehenden Ansprüche, wobei die zumindest zwei Merkmale aus einem Signal (208) oder aus einer Kombination solcher von dem Nachbarn (202) empfangenen Signale bestimmt werden, wobei die zumindest zwei Merkmale jeweils unterschiedliche Merkmale sind, die aus einer Gruppe ausgewählt werden, bestehend aus:
Letztes Update, Distanz, Empfangene Leistung, Kursdifferenz, Relative Geschwindigkeit, Gesehene Zeit und Geschwindigkeit des Nachbarn.

5. Das Verfahren (100) gemäß einem der vorangehenden Ansprüche, wobei die zumindest zwei Merkmale beginnend mit dem relevantesten Merkmal (302) ausgewählt werden.

6. Das Verfahren (100) gemäß einem der vorangehenden Ansprüche, wobei die bereitgestellten zumindest zwei Merkmale des Nachbarn (202) aus einem Signal (208) oder aus einer Kombination solcher von dem Nachbarn (202) empfangenen Signale bestimmt werden, wobei die zumindest zwei Merkmale aus der Gruppe von Merkmalen ausgewählt werden:
Letztes Update, Distanz, Empfangene Leistung und Kursdifferenz.

7. Das Verfahren (100) gemäß einem der vorangehenden Ansprüche, wobei die bereitgestellten zumindest zwei Merkmale des Nachbarn (202) aus einem Signal (208) oder aus einer Kombination solcher von dem Nachbarn (202) empfangenen Signale bestimmt werden, wobei zumindest eines der zwei bereitgestellten Merkmale ein Letztes Update ist, das im Hinblick auf eine Frequenz eines Empfangs des Signals optimiert ist.

8. Das Verfahren (100) gemäß einem der vorangehenden Ansprüche, ferner umfassend:
Bestimmen der Zuverlässigkeit basierend auf einer Kanalbelegungsrate, wenn ein Kanal konstant gesättigt ist und/oder wenn eine Anzahl von verfügbaren Nachbarn höher als eine vordefinierte Anzahl ist.

9. Das Verfahren (100) gemäß einem der vorangehenden Ansprüche, wobei die Zuverlässigkeit (110) unter Verwendung einer jeweils unterschiedlichen Gewichtung der zumindest zwei Merkmale (104, 106) gemäß ihrer Relevanz (308) bestimmt wird.

10. Das Verfahren (100) gemäß einem der vorangehenden Ansprüche, wobei die Zuverlässigkeit (110) unter Verwendung eines neuronalen Netzes bestimmt wird, wobei das neuronale Netz Koeffizienten umfasst, die auf einem Training mit Merkmalen (209, 210) basieren, die zumindest teilweise aus einem Signal und einer Information über einen jeweiligen erfolgreichen Empfang eines Datenpakets (212) bestimmt werden.

11. Das Verfahren (100) gemäß einem der vorangehenden Ansprüche, ferner umfassend: Auswählen eines zuverlässigen Nachbarn (202) aus einer Mehrzahl von Nachbarn basierend auf der Zuverlässigkeit des Nachbarn (202).

12. Das Verfahren (100) gemäß Anspruch 11, wobei ein Nachbar (202) aus der Mehrzahl von Nachbarn ausgewählt wird, wenn eine jeweilige Zuverlässigkeit des Nachbarn (202) über einer oberen Schwelle liegt.

13. Das Verfahren (100) gemäß Anspruch 11 oder 12, wobei der Nachbar (202) mit einer höchsten Zuverlässigkeit aus einer Mehrzahl von Nachbarn ausgewählt wird.

14. Das Verfahren (100) gemäß einem der vorangehenden Ansprüche, ferner umfassend ein Bestimmen von Parametern, die die Relevanz (308) anzeigen, die jeweils zumindest zwei Merkmalen (302, 304) im Hinblick auf eine Zuverlässigkeit einer Funkverbindung zu dem Nachbarn (202) zugeordnet ist, wobei die Parameter durch Daten eines Szenarios bestimmt werden, das Funkverbindungen zwischen Nachbarn (200, 202) umfasst, wobei die Daten die Merkmale (302, 304) und eine Information über einen Erfolg eines Empfangs eines gesendeten Datenpakets (212) durch den Nachbarn (202) umfassen.

15. Eine Vorrichtung (204, 206) zum Bestimmen der Zuverlässigkeit eines Nachbarn, die Vorrichtung umfassend:

eine Merkmalsauswahlvorrichtung, die ausgebildet ist, zumindest zwei Merkmale (104, 106) eines Nachbarn auszuwählen, wobei die Merkmale (104, 106) des Nachbarn Informationen über den Nachbarn oder über eine Beziehung des Nachbarn zu der Klassifizierungsvorrichtung umfassen, wobei die Merkmale aus einem Signal (208) bestimmt werden, das Dateninformationen über den Nachbarn umfasst, wobei das Signal von dem Nachbarn empfangen wird, und wobei die zumindest zwei Merkmale in der Reihenfolge ihrer Relevanz aus einer Einstufung von Merkmalen (302, 304, 306) gemäß einer Relevanz (308) ausgewählt werden; und
eine Einheit, die ausgebildet ist, eine Zuverlässigkeit (110) einer Funkverbindung zu dem Nachbarn basierend auf den zumindest zwei Merkmalen zu bestimmen.

16. Ein System zum Bestimmen der Zuverlässigkeit eines Nachbarn, das System umfassend

eine Bestimmungsvorrichtung, die ausgebildet ist, Parameter gemäß Anspruch 14 zu bestimmen; und
eine Vorrichtung (204) gemäß Anspruch 15.

17. Ein Fahrzeug (200), umfassend eine Vorrichtung (204) gemäß Anspruch 15.

18. Ein Computerprogramm, umfassend einen Programmcode, der bei Ausführung verursacht, dass ein programmierbarer Prozessor das Verfahren gemäß einem der Ansprüche 1 bis 14 ausführt.

**Revendications**

1. Procédé (100) pour déterminer une fiabilité d'un voisin (202) dans un réseau ad hoc, le procédé comprenant :

fournir (102) au moins deux caractéristiques (104, 106) du voisin (202), les caractéristiques (104, 106) du voisin comprenant des informations sur le voisin ou sur une relation du voisin avec un premier dispositif, les caractéristiques (104, 106) étant déterminées à partir d'un signal (208) comprenant des informations de données sur le voisin, le signal (208) étant reçu du voisin (202) ; et
déterminer (108) une fiabilité (110) d'une liaison radio avec le voisin (202) sur la base des au moins deux caractéristiques,
dans lequel la fourniture (102) comprend un classement de caractéristiques (302, 304, 306) selon une pertinence (308) et une sélection des au moins deux caractéristiques dans l'ordre de leur pertinence.

2. Procédé (100) selon la revendication 1, la fiabilité (110) étant représentée par une valeur de probabilité, la valeur de probabilité étant une estimation d'une probabilité qu'un paquet de données (212) envoyé au voisin (202) soit reçu par le voisin (202).

3. Procédé (100) selon la revendication 1 ou la revendication 2, le signal (208) reçu du voisin étant une mise à jour GeoNetworking périodique et/ou un message de sensibilisation coopérative CAM

4. Procédé (100) selon l'une des revendications précédentes, les au moins deux caractéristiques étant déterminées à partir d'un signal (208) ou d'une combinaison de tels signaux reçus du voisin (202), les au moins deux caractéristiques étant des caractéristiques respectivement différentes choisies parmi un groupe constitué par :
dernière mise à jour, distance, puissance reçue, différence de cap, vitesse relative, temps vu et vitesse du voisin.

5. Procédé (100) selon l'une des revendications précédentes, les au moins deux caractéristiques étant sélectionnées à partir de la caractéristique la plus pertinente (302).

6. Procédé (100) selon l'une des revendications précédentes, les au moins deux caractéristiques fournies du voisin (202) étant déterminées à partir d'un signal (208) ou d'une combinaison de tels signaux reçus du voisin (202), les au moins deux caractéristiques étant sélectionnées parmi le groupe de caractéristiques : dernière mise à jour, distance, puissance reçue et différence de cap.

7. Procédé (100) selon l'une des revendications précédentes, les au moins deux caractéristiques fournies du voisin (202) étant déterminées à partir d'un signal (208) ou d'une combinaison de tels signaux reçus du voisin (202), dans lequel au moins l'une des deux caractéristiques fournies est une dernière mise à jour qui est optimisée par rapport à une fréquence d'une réception du signal.

8. Procédé (100) selon l'une des revendications précédentes, comprenant en outre le fait de :
déterminer la fiabilité sur la base d'un rapport d'occupation de canal si un canal est constamment saturé et/ou si un nombre de voisins disponibles est supérieur à un nombre prédéfini.

9. Procédé (100) selon l'une des revendications précé-

cédentes, la fiabilité (110) étant déterminée en utilisant une pondération respectivement différente des au moins deux caractéristiques (104, 106) en fonction de leur pertinence (308).

10. Procédé (100) selon l'une des revendications précédentes, la fiabilité (110) étant déterminée en utilisant un réseau neuronal, le réseau neuronal comprenant des coefficients basés sur un apprentissage avec des caractéristiques (209, 210) étant déterminées au moins partiellement à partir d'un signal et d'une information sur une réception réussie respective d'un paquet de données (212).

11. Procédé (100) selon l'une des revendications précédentes, comprenant en outre le fait de : sélectionner un voisin (202) fiable parmi une pluralité de voisins sur la base de la fiabilité du voisin (202).

12. Procédé (100) selon la revendication 11, un voisin (202) étant sélectionné parmi la pluralité de voisins si une fiabilité respective du voisin (202) est supérieure à un seuil supérieur.

13. Procédé (100) selon la revendication 11 ou 12, dans lequel le voisin (202) ayant la plus haute fiabilité d'une pluralité de voisins est sélectionné.

14. Procédé (100) selon l'une des revendications précédentes, comprenant en outre la détermination de paramètres qui indiquent la pertinence (308) respectivement attribuée à au moins deux caractéristiques (302, 304) par rapport à une fiabilité d'une liaison radio avec le voisin (202), les paramètres étant déterminés par des données d'un scénario comprenant des liaisons radio entre des voisins (200, 202), les données comprenant lesdites caractéristiques (302, 304) et une information sur un succès d'une réception par le voisin (202) d'un paquet de données (212) envoyé.

15. Dispositif (204, 206) pour déterminer la fiabilité d'un voisin, le dispositif comprenant

un dispositif de sélection de caractéristiques, configuré pour sélectionner au moins deux caractéristiques (104, 106) d'un voisin, les caractéristiques (104, 106) du voisin comprenant des informations sur le voisin ou sur une relation du voisin avec le dispositif de classification, les caractéristiques étant déterminées à partir d'un signal (208) comprenant des informations de données sur le voisin, le signal étant reçu du voisin, et les au moins deux caractéristiques étant sélectionnées dans l'ordre de leur pertinence à partir d'un classement de caractéristiques (302, 304, 306) selon une pertinence (308) ; et une unité configurée pour déterminer une fiabilité (110) d'une liaison radio avec le voisin sur la base des au moins deux caractéristiques.

16. Système pour déterminer la fiabilité d'un voisin, le système comprenant

un dispositif de détermination configuré pour déterminer des paramètres selon la revendication 14 ; et
un dispositif (204) selon la revendication 15.

17. Véhicule (200) comprenant un dispositif (204) selon la revendication 15.

18. Programme d'ordinateur comprenant un code de programme qui, lorsqu'il est exécuté, amène un processeur programmable à effectuer le procédé selon l'une des revendications 1 à 14.

FIG. 1

FIG. 2

# FIG. 3

FIG. 4

# FIG. 5

# FIG. 6

# FIG. 7

# FIG. 8

800

TABLE I
TRAFFIC DENSITIES

| Density | Time Period | Vehicles |
|---|---|---|
| 802 low | 11:05am - 11:20am | 1700 |
| 804 medium | 1:20pm - 1:35pm | 3200 |
| 806 high | 8:15am - 8:30am | 5000 |

# FIG. 9

900

TABLE II
BEACONING SCHEMES

908

| Scheme | $f_{min}$ | $f_{max}$ |
|---|---|---|
| 902 GeoNetworking[3] | 0.27HZ | 0.33 Hz |
| 904 CAM adaptive[II] | 1 Hz | 10 Hz |
| 906 CAM 10Hz | 10Hz | 10 Hz |

# FIG. 10

1000

TABLE III
SIMULATION PARAMETERS

| Parameter 1002 | Value 1004 |
|---|---|
| Standard<br>Tx Power, Tx Rate<br>Propagation Model<br>Penetration Rate | 802.11p<br>23 dBm, 6Mbps<br>Cheng et al.[15] with [16]<br>20% |
| Neighbor Timeout<br>Packet Size | 20 s[3]<br>300 Bytes |
| Simulation Runs<br>Duration per Run | 32<br>1000s |

**EP 3 461 166 B1**